Europäisches Patentamt

European Patent Office

Office européen des brevets

(11) Veröffentlichungsnummer: **0 078 774**
A1

(12) **EUROPÄISCHE PATENTANMELDUNG**

(21) Anmeldenummer: 82810459.6

(51) Int. Cl.³: **G 03 B 27/32**

(22) Anmeldetag: 29.10.82

(30) Priorität: 04.11.81 GB 8133196

(43) Veröffentlichungstag der Anmeldung: 11.05.83
Patentblatt 83/19

(84) Benannte Vertragsstaaten: **BE CH DE FR GB IT LI**

(71) Anmelder: **CIBA-GEIGY AG, Patentabteilung Postfach,
CH-4002 Basel (CH)**

(72) Erfinder: **Turner, George F. A. M., "Monks Acres"
Woolmongers Lane, Blackmore Ingatestone Essex
CM4 0JX (GB)**
Erfinder: **Hammond, Martin Graham, 27A Brock Hill,
Runwell Wickford Essex (GB)**

(54) **Photographisches Hellraum-Vergrösserungsgerät.**

(57) Das Hellraum-Vergrösserungsgerät weist einen licht-dichten Raum auf, der durch ein Gehäuse (1), einen Balg (2) und einen Kasten (24) gebildet ist. Der Kasten (24) ist höhenverschiebbar am Gehäuse (1) gelagert und enthält die Projektionslichtquelle (26), den Vorlagenhalter (10), das Vergrösserungsobjektiv (3) und einen Umlenkspiegel (4). Am Gehäuseboden (15) befindet sich ein podestarti-ger, nach allen Seiten frei verschiebbarer Träger (14) mit einem Linsenraster-Reflexionsschirm (12) und einem schwenkbaren Maskierrahmen (13). Durch ein lichtdicht verschliessbares Fenster (5) ist über den Umlenkspiegel (4) die Oberfläche des Linsenrasterschirmes (12) in vol-ler Grösse sichtbar. An der Vorderseite des Gerätes be-finden sich zwei Handlöcher (18) mit lichtdichten Man-schetten (17). Durch diese Handlöcher hindurch können der Träger (14) und dessen Maskierrahmen (13) mani-puliert und mittels eines Schalters (20) die Projektions-lichtquelle (26) ein- und ausgeschaltet werden.

Die Fokussierung erfolgt bei offenem Fenster (5) über den Spiegel (4) durch Beobachtung der sehr hellen Ab-bildung der Kopiervorlage auf dem Linsenrasterschirm (12). Anschliessend wird aus einer lichtdichten Hülle (22) ein Blatt photographisches Papier auf den Schirm gelegt, belichtet und wiederum lichtdicht verpackt.

0078774

- 1 -

CIBA-GEIGY AG                          87-13631/ =
Basel (Schweiz)

**Photographisches Hellraum-Vergrösserungsgerät.**

Die Erfindung betrifft ein photographisches Hellraum-Vergrösserungsgerät gemäss Oberbegriff des Patentanspruchs 1.

In den letzten Jahren ist das Photographieren ein in wachsendem Masse
beliebtes Hobby geworden; dabei wird es aber immer schwieriger zu Hause einen Raum zu finden, der genügend abgedunkelt werden kann, um als
die für die Ausübung dieses Hobby im allgemeinen zum Entwickeln photographischer Filme und zur Anfertigung von Abzügen benötigte Dunkelkammer zu dienen.

Um dieses Problem zu lösen, sind in neuerer Zeit Geräte angeboten
worden, die gestatten, den gesamten Prozess der Verarbeitung von photographischem Material einschliesslich der Anfertigung von Kopien bei
Tageslicht durchzuführen, d.h. in normal beleuchteten, unverdunkelten
Räumen, also ohne dass eine Dunkelkammer benötigt wird. Zu diesen
Geräten gehört auch ein in unverdunkelten Räumen verwendbares Vergrösserungsgerät. Solche Hellraum-Vergrösserungsgeräte bestehen oft
aus einem mit lichtundurchlässigem Material ausgekleideten Rahmen
oder Gehäuse, und einem in letzterem vorhandenen Betrachtungs- oder
Schaufenster und einem Projektionsschirm. Jedoch ist es bei den bekannten Vergrösserungsgeräten schwierig, bei der Verwendung bei
Tageslicht ein scharfes Bild auf dem Projektionsschirm zu fokussieren.

Die meisten bekannten Vergrösserungsgeräte zur Verwendung bei Tageslicht, also ohne Erfordernis einer Dunkelkammer, besitzen keine besonderen Mittel, um das vergrösserte Bild im Gerät betrachten zu
können. Jedoch sind in der DE-OS 28 47 187 und in der US-PS 3 890 043
Vergrösserungsgeräte mit geschlossenem Gehäuse beschrieben, in welchen ein Spiegel, der in den Lichtpfad des durch die transparente Bildvorlage projizierten Lichtes hinein und aus ihm wieder herausbewegt werden kann und der ein Bild der Vorlage auf einen Schirm aus Mattglas fokussiert, welches durch den Benutzer von aussen her auf der Mattscheibe betrachtet werden kann. Jedoch sind solche Vergrösserer von verhältnismässig kompliziertem Aufbau.

In der FR-PS 2 455 756 ist ein Senkrecht-Projektor beschrieben, in welchem eine transparente Bildvorlage auf einer Fresnelschen Linse (Stufenlinse) fokussiert und von der letzteren Linse aufwärts in einer Sammellinse und weiter auf einen schräg gestellten Spiegel reflektiert wird, der das Bild auf einen Schirm projiziert. Dies ist jedoch kein Vergrösserungsgerät und schon gar kein solches mit geschlossenem Gehäuse. Ausserdem funktioniert eine Fresnelsche Linse nur in Verbindung mit einer zur Erzeugung eines betrachtbaren Bildes erforderlichen Optik, die kostspielig und kompliziert ist.

Es ist daher eine Aufgabe der Erfindung, ein Vergrösserungsgerät zur Verwendung in unverdunkelten Räumen zu verwirklichen, welches eine Bildvorlage zufriedenstellend unter Tageslicht zu fokussieren gestattet.

Diese Aufgabe wird nach der Erfindung bei einem Vergrösserungsgerät der eingangs beschriebenen Art gelöst, welches die im kennzeichnenden Teil des Anspruchs 1 aufgeführten Merkmale besitzt.

Bevorzugte Ausführungsformen des erfindungsgemässen Vergrösserungsgerätes weisen eines oder mehrere der in den Unteransprüchen aufgeführten Merkmale auf.

Hierbei ersetzt der Linsenraster-Projektionsschirm die weiss reflektierende Fläche des bei bekannten Geräten verwendeten Maskierrahmens.

Mittels des erfindungsgemässen Vergrösserungsgeräts kann ein leuchtend klares Bild der in das Vergrösserungsgerät eingebrachten Filmvorlage unter sehr hellen internen Beleuchtungsbedingungen im Spiegel des Geräts, gegebenenfalls ausserdem durch einen Filter, betrachtet werden. Das im Spiegel betrachtbare Bild kann dazu verwendet werden, das Bild auf dem Linsenrasterschirm scharf einzustellen.

In einer Ausführungsform des Vergrösserungsgeräts nach der Erfindung
wird dasselbe teilweise von einer lichtundurchlässigen Tuchverkleidung
umhüllt; in einer anderen Ausführungsform hat das Gehäuse eine starre,
lichtundurchlässige, kastenartige Struktur.

Infolge der Verwendung des Linsenrasterschirmes muss das durch den
Schirm reflektierte Licht in im wesentlichen der gleichen optischen
Achse verwendet werden wie das einfallende Licht, weil Bildlicht,
welches um mehr als 15° vom einfallenden Licht abweicht, in weitgehendem Masse geschwächt ist. Jedoch wird dank der Verwendung des unter
45° gegen die optische Achse des Bildlichtes geneigten Spiegels, welcher einen Teil des vom Linsenrasterschirm im wesentlichen entlang
dem Pfad des einfallenden Lichtes reflektierten Lichtes ablenkt, ein
äusserst klares Bild der Vorlage auf dem Spiegel erzeugt. Auch kann
der Spiegel auf eine für den Betrachter bequeme Höhe angeordnet
werden.

Ein für die Zwecke des erfindungsgemässen Vergrösserungsgeräts
geeigneter Linsenrasterschirm kann z.B. aus demselben Material hergestellt werden, das auch für Strassenschilder, Projektionsschirme
und z.B. in England für Autonummernschilder Verwendung findet.

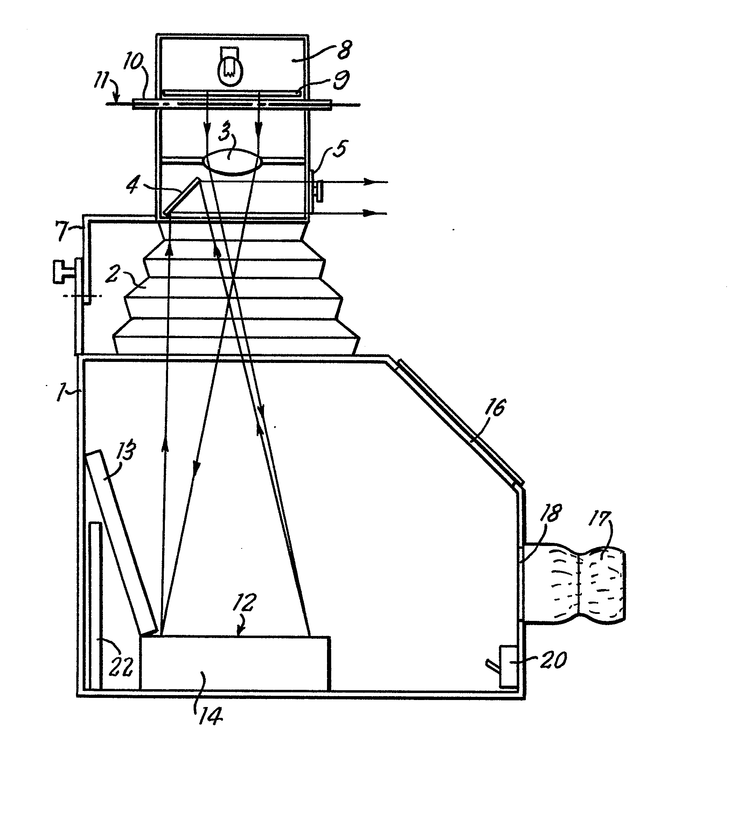

Weitere Einzelheiten und Vorteile des Vergrösserungsgeräts nach der
Erfindung werden in der nachfolgenden Beschreibung im Zusammenhang
mit der einzigen Figur der beiliegenden Zeichnung erläutert, welche
schematisch einen Längsschnitt durch eine bevorzugte Ausführungsform
des erfindungsgemässen Vergrösserungsgeräts zeigt.

Das in der Zeichnung dargestellte Vergrösserungsgerät umfasst ein Gehäuse 1, vorzugsweise aus Polystyrol oder einem anderen lichtdurchlässigen Material, dessen obere Endwand einen ausziehbaren Balg 2 trägt, der mittels eines verstellbaren Rahmens 7 nach oben hin verlängert oder nach unten verkürzt und in der gewünschten Stellung durch die Stellschraube 23 festgestellt werden kann. Der Rahmen 7 umfasst ein über dem oberen Balgende vorgesehenes Gestell oder einen Kasten 24 (Apparatekopf), in welchem in einer Querwand 25 ein Vergrösserungsobjektiv 3 eingebaut ist, dessen optische Achse in der gezeigten Stellung senkrecht zum Boden 15 des Gehäuses 1 verläuft und das mittels eines Handknopfes 28 einstellbar ist.

In der oberen Endwand des Kastens 24 ist ein Vorlagenhalter 10 vorgesehen, welcher eine zu vergrössernde transparente Bildvorlage 11, z.B. ein Filmnegativ, trägt. Ueber dem Vorlagenhalter 10 befindet sich ein Lichtquellenhalter 8, in welchem eine Lichtquelle 26 befestigt ist, deren Lichtstrahlen längs der optischen Achse des Objektivs 3 durch den Balg 2 hindurch in das Innere des Gehäuses 1 hinein auf dessen Boden 15 zu gerichtete sind. Zwischen die Lichtquelle 26 und den Vorlagenhalter 10 ist eine im Lichtquellenhalter 8 befestigte Lichtstreuscheibe 9 aus Opalglas zwischengeschaltet.

Unterhalb des Objektivs 3 ist auf dem Gehäuseboden 15 ein in einem Schirmträger 14 befestigter Linsenrasterschirm 12 mit einer Oberfläche aus Glasperlen angeordnet, der so auf dem Gehäuseboden 15 vor- und rückwärts und seitlich hin und her verschoben werden kann, dass an einer gewünschten Stelle die optische Achse des Objektivs 3 seine Oberfläche durchstösst. An den Schirmträger 14 ist seitlich ein Maskierrahmen 13 schwenkbar angelenkt, mittels welchem die reflektierende Oberfläche (Bildfeld) des Schirms 12 begrenzt werden kann. In der Zeichnung ist der Maskierrahmen 13 aus dem Strahlengang herausgeschwenkt. Ausserhalb der optischen Achse ist im Kasten 24 unter dem Niveau des Objektivs 3 ein unter einem Winkel von 45° zur optischen Achse schräggestellter, voll versilberter Spiegel 4 eingebaut, und in der ihm gegenüber auf der anderen Seite der optischen Achse gelegenen Kastenwand ein lichtdicht verschliessbares Fenster 5 angeordnet.

Anstelle des voll reflektierenden Spiegels 4 kann auch ein halbdurchlässiger Spiegel verwendet werden. Dieser wird dann wie in der
Figur strichliert angedeutet und mit 4' bezeichnet direkt im Abbildungsstrahlengang angeordnet. Der Spiegel 4' ist vorzugsweise so gehaltert, dass er aus dem Strahlengang herausgezogen werden kann.
Halte- und Verschiebevorrichtungen für optische Komponenten, wie
Spiegel und dergleichen, sind dem Fachmann wohlbekannt, so dass in
der Figur auf deren Darstellung aus zeichnerischen Gründen verzichtet
wurde.

Durch Höhenverstellung des Rahmens 7 und damit des Kastens 24 kann
der Vergrösserungsmassstab des vom Vergrösserungsobjektiv 3 auf
dem Schirm 12 erzeugten Bildes der Vorlage 11 eingestellt werden.
Hierdurch ist der Bildausschnitt wählbar. Die Fokussierung erfolgt
dann mittels des Objektiveinstellknopfes 28. Die Höhenverstellung
des Kastens 24 und die Fokussierung können so miteinander verknüpft
sein, dass sich für jeden Vergrösserungsmassstab die Fokussierung
automatisch einstellt. Automatische Fokussierungen dieser Art sind
dem Fachmann wohl bekannt, so dass auf ihre Darstellung verzichtet
werden kann.

In einer die eine obere Kante des Gehäuses 1 vorzugsweise unter einem
Winkel von 45° abschneidenden Schrägwand ist ein abdeckbarer oder
auswechselbarer Lichtfilter 16 vorgesehen, der z.B. alles Licht der
Umgebung von Wellenlängen unter 550 nm ausfiltriert.

An der Stirnseite 27 des Gehäuses 1 sind zwei Lichtschleusen vorgesehen, die aus zwei Handlöchern 18 und zwei diese lichtdicht verschliessenden Handlochdeckeln 17 aus lichtundurchlässigem Material
bestehen. Durch diese Lichtschleusen kann der Benutzer gleichzeitig

- 6 -

beide oder auch je nach Bedarf die eine oder die andere Hand in das Innere des Gehäuses 1 einführen, ohne dass Licht von aussen in nennenswertem Masse in das Gehäuseinnere eindringen kann. Nur eine der beiden Lichtschleusen mit Handloch 18 und Handlochdeckel 17 ist in der Zeichnung sichtbar, die andere liegt hinter ihr. Ein Lichtschalter 20 ist am oder im Gehäuse 1 an geeigneter, z.B. durch eine der Oeffnungen 18 erreichbare Stelle angebracht.

In der Zeichnung deuten Pfeile den Weg der Lichtstrahlen von der Lichtquelle 26 bzw. der Lichtstreuscheibe 9 aus durch das zu vergrössernde Negativ 11 und weiter durch das Objektiv 3 zum Linsenraster 12 hin an. Diese Strahlen werden zum grössten Teil vom Schirm 12 entlang der optischen Achse des einfallenden Lichtes auch wieder zurückgeworfen. Ein Teil derselben fällt dabei aber auf die schräg abwärts weisende Spiegelfläche des Spiegels 4 und wird von ihm so abgelenkt, dass er durch das geöffnete Fenster 5 aus dem Kasten 24 nach aussen fällt.

Bei der Verwendung kann in das Gehäuseinnere eine einen unbelichteten Bogen photographischen Papiers enthaltende Hülle 22 an leicht zugänglicher Stelle hineingestellt werden. Ein Negativ kann nun als Bildvorlage in den Vorlagenhalter 10 eingelegt und ein gewünschter Filter 16 am Gehäuse 1 eingesetzt werden. Der Benutzer steckt nun seine beiden Hände durch die Handlöcher 18 und schaltet durch Betätigung des Schalters 20 die Lichtquelle 26 ein.

Nun bestimmt der Benutzer durch entsprechende Positionierung des Schirmträgers 14 und damit des Schirmes 12 und durch entsprechende Höheneinstellung des Kastens 24 den gewünschten Bildausschnitt und stellt das Bild am Schirm 12 mittels des Handeinstellknopfes 28 des Objektivs 3 scharf ein. Die Auswahl des Bildausschnittes durch entsprechende Einstellung des Vergrösserungsmassstabes kann durch Beobachtung durch die Filterscheibe und/oder das offene Fenster 5 erfolgen. Eine präzise Einstellung der Bildschärfe ist hingegen nur durch Beobachtung durch das Fenster 5 über

- 7 -

den Umlenkspiegel 4 möglich.

In einer vereinfachten Ausführungsform ist ein Fixfokus-Objektiv 3 vorgesehen. Dabei erfolgt die Fokussierung durch ensprechende Höheneinstellung des Kastens 24. Eine Aenderung des Abbildungsmassstabes ist dabei nicht möglich.

Sobald die gewünschte Bildschärfe eingestellt ist, schliesst der Benutzer das Fenster 5 und schaltet die Lichtquelle 26 durch Betätigen des Schalters 20 aus.

Er steckt nun seine Hände wiederum durch die Handlöcher 18 und klappt die Filmmaske 13 hoch, entnimmt der Hülle 22 den unbelichteten Bogen und legt ihn auf den Schirm 12, worauf er die Filmmaske 13 wieder auf den Bogen herunterklappt. Nunmehr wird der Bogen durch Betätigen des Schalters 20 und damit bewirktem Einschalten der Lichtquelle 26 während der erforderlichen Zeit belichtet. Nach Beendigung der Belichtung durch Wiederabschalten der Lichtquelle 26 wird die Filmmaske 23 angehoben und der belichtete Bogen entfernt und wieder in die Hülle 22 getan. Der Benutzer zieht nun seine Hände wieder aus den beiden Lichtschleusen 17, 18 heraus und entfernt das Filter 16. Die Hülle 22 wird aus dem Gehäuse 1 herausgenommen und der belichtete Bogen oder Film weiter verarbeitet.

Bei der Ausführungsform mit dem halbdurchlässigen Spiegel 4' wird dieser während der Belichtungsphase aus dem Abbildungsstrahlengang herausgezogen.

Als Hülle 22 kann vorzugsweise auch eine lichtdichte flüssigkeitsdurchlässige Kassette verwendet werden. In eine solche Kassette wird das photographische Blatt nach seiner Belichtung eingelegt und die Kassette geschlossen. Die Kassette mit dem darin befindlichen Blatt wird dann aus dem Gehäuse 1 des Vergrösserungsapparates herausgenommen und im geschlossenen Zustand in die Behandlungsbäder gebracht.

- 8 -

Es kann auch ein Kassettentyp verwendet werden, in welchem im geöffneten Zustand die Belichtung durchführbar ist.

Patentansprüche

1. Photographisches Hellraum-Vergrösserungsgerät mit einem lichtdichten Raum, in welchem eine Projektionslichtquelle (26), ein
Bildvorlagenhalter (10) und ein Vergrösserungsobjektiv (3) angeordnet sind und welcher die Abbildungsebene des Vergrösserungsobjektivs
mit einschliesst, dadurch gekennzeichnet, dass in der Abbildungsebene des Vergrösserungsobjektivs (3) ein Linsenraster-Reflexionsschirm (12) und im Reflexionsbereich dieses Schirms ein Spiegel (4)
angeordnet sind, welcher Spiegel mindestens einen Teil des vom
Schirm (12) reflektierten Lichtes durch eine fensterartige Oeffnung
(5) des lichtdichten Raumes nach aussen ablenkt, wobei der Spiegel
(4) von solcher Grösse und so angeordnet ist, dass auf ihm ein auf
den Schirm (12) fokussiertes Bild durch die Oeffnung (5) hindurch
vollständig erblickt werden kann.

2. Photographisches Hellraum-Vergrösserungsgerät nach Anspruch 1,
dadurch gekennzeichnet, dass der Spiegel (4, 4') das von ihm nach
aussen abgelenkte Licht unter einem Winkel von etwa 90° zur optischen
Achse des Vergrösserungsobjektivs (3) ablenkt.

3. Photographisches Hellraum-Vergrösserungsgerät nach Anspruch 2,
dadurch gekennzeichnet, dass der Spiegel (4) voll reflektierend und
zur optischen Achse des Vergrösserungsobjektivs (3) unter einem
Winkel von 45° neben dessen Abbildungsstrahlengang angeordnet ist.

4. Photographisches Hellraum-Vergrösserungsgerät nach Anspruch 3,
dadurch gekennzeichnet, dass der Spiegel (4) so nahe wie möglich
am Abbildungsstrahlengang des Vergrösserungsobjektivs (3) angeordnet
ist.

5. Photographisches Hellraum-Vergrösserungsgerät nach Anspruch 2,
dadurch gekennzeichnet, dass der Spiegel (4') halbdurchlässig und direkt im Abbildungsstrahlengang des Vergrösserungsobjektivs (3)
unter einem Winkel von 45° zu dessen optischer Achse angeordnet ist.

6. Photographisches Hellraum-Vergrösserungsgerät nach Anspruch 5,
dadurch gekennzeichnet, dass der halbdurchlässige Spiegel (4')
aus dem Abbildungsstrahlengang herausziehbar ist.

0078774

Europäisches Patentamt

EUROPÄISCHER RECHERCHENBERICHT

Nummer der Anmeldung

EP 82 81 0459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. $^3$) |
|---|---|---|---|
| A | US-A-4 053 219 (W.R. DUMM) * Spalten 3-6; Figuren 1-7 * | 1 | G 03 B 27/32 |
| A | US-A-3 644 036 (M.O. CANFIELD) * Spalten 3-7; Figuren 1-10 * | 1 | |
| D,A | US-A-3 890 043 (W. PRAMSTRALLER) * Spalten 3,4; Figuren 1-3 * | 1 | |
| D,A | DE-A-2 847 187 (DURST AG) * Seite 9, Zeilen 19-34; Seiten 10,11; Figur 4 * | 1,3,4 | |
| A | US-A-3 773 419 (F.L. SUMMER) * Spalten 3,4; Figuren 1,2 * | 1-5 | |
| A | FR-A-1 300 965 (P.M. PRIOU) * Seiten 2,3; Seite 4, Spalte 1; Figuren 1,13 * | 1 | RECHERCHIERTE SACHGEBIETE (Int. Cl. $^3$) G 03 B 27/32 G 03 B 27/46 G 03 B 21/132 G 03 B 21/56 |
| D,A | FR-A-2 455 756 (P. FRERES, M. RONNET et CIE.) * Seiten 2,3; Figur 1 * | 1 | |
| A | DE-B-1 120 396 (CATAPHOTE CORP.) * Spalten 4-8; Figuren 1-4 * | | |

Der vorliegende Recherchenbericht wurde für alle Patentansprüche erstellt.

| Recherchenort DEN HAAG | Abschlußdatum der Recherche 27-01-1983 | Prüfer BOEYKENS J.W. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82